# EUROPEAN PATENT APPLICATION

(11) **EP 4 163 264 A1**
(43) Date of publication of application: **12.04.2023**
(21) Application number: 21382904.7
(22) Date of filing: 08.10.2021
(51) Int. Cl.: C04B 28/06, C04B 40/06, C04B 111/70

(54) **MULTICOMPONENT EPOXY-CEMENT-CONCRETE SYSTEM WITH ULTRA-FAST DEVELOPMENT OF COMPRESSIVE STRENGTH**

(71) Applicant: Sika Technology AG, 6340 Baar (CH)
(72) Inventor: CALAMA, Juan Antonio, 27007 SALAMANCA (ES)
(74) Representative: Sika Patent Attorneys

(57) **Abstract**

The invention relates to multicomponent compositions comprising epoxy resin, hardener, and ternary hydraulic binder. Said ternary hydraulic binder consisting of Portland cement, calcium sulfate, and calcium aluminate cement or calcium sulfoaluminate cement, wherein the content of calcium aluminate cement or of calcium sulfoaluminate cement is higher than the content of Portland cement.

The multicomponent compositions of the present invention are useful for coating, joining, sealing, injecting, anchoring, or grouting operations in new construction or in refurbishment of existing buildings.

## Description

### Technical field

The invention relates to a multicomponent composition comprising epoxy resin, hardener, and ternary hydraulic binder. The multicomponent compositions of the present invention are useful for coating, joining, sealing, injecting, anchoring, or grouting operations in new construction or in refurbishment of existing buildings.

### Background

Multicomponent compositions based on epoxy resins and on cement have already been known for many years. With the development of water-thinnable amine hardener components for epoxy resins, these systems have experienced substantial onward development.

The ECC (epoxy-cement-concrete) system may be produced by addition of epoxy resins, preferably emulsifiable in water, and a hardener for said epoxy resin to cement paste and inorganic additives. Within this system, the curing reactions of the cement and the epoxide component run in parallel, with a thermoset network forming from the epoxy resin in the presence of a hardener. Compositions of this kind have various advantages, such as, for example, better workability of the fresh mortar, better adhesion of the fresh mortar and of the solid mortar to the substrate, better water retention capacity, enhanced freeze/deicing salt resistance, and, depending on the epoxide component used, better elasticity of the solid mortar.

ECC systems are known in the art which rely on ternary hydraulic binder systems. Ternary binders are hydraulic binders which comprise or essentially consist of high aluminate cement or sulfoaluminate cement, calcium sulfate, and Portland cement. The main advantage of ternary hydraulic binders over conventional hydraulic binders are their fast-curing characteristics. This means that work can be continued within a shorter time, which is a decisive economic advantage. In addition, ternary binders are often characterized by lower shrinkage than binders based on normal cement.

JP H07-315907 A relates to a composition comprising an epoxy resin, a hardener, Portland cement, calcium aluminate cement, gypsum, and a lithium compound.

EP 3022167 discloses an aqueous epoxy resin system combined with a ternary hydraulic binder system.

However, the systems of prior art still do not develop a high compressive strength fast enough. Also, at least for some applications, the shrinkage of systems of prior art is still too high.

### Summary of the invention

The object of the invention is therefore to provide an epoxy cement composition (ECC composition) with a very fast development of compressive strength. Such very fast development of compressive strength is especially useful where several materials must be applied on top of each other and/or during repair where long waiting times must be avoided to ensure fast release for use. It is thus also an object of the present invention to provide methods and uses especially for flooring applications, for repair of mortar and concrete systems, and in particular for anchoring of reinforcing steel bars as well as injection grouts.

Within the present context the term "very fast development of compressive strength" relates to the development of a compressive strength as measured according to standard EN 12190 on 4x4x16cm prisms of at least 10 MPa, preferably at least 15 MPa, more preferably at least 25 MPa, especially at least 35 MPa within not more than 6 hours of curing at 23°C/ 50% r.h, preferably not more than 3 hours of curing, especially not more than 1.5 hours of curing.

The objectives have surprisingly been achieved by the provision of a multicomponent composition comprising at least one epoxy resin, at least one hardener for said epoxy resin, and a special ternary hydraulic binder.

It has been found that where a ternary hydraulic binder used in a multicomponent composition of the present invention consists of Portland cement, calcium sulfate, and calcium aluminate cement, especially high compressive strength can be achieved where the content by weight of calcium aluminate cement in said ternary hydraulic binder is higher than the content by weight of Portland cement, and where the content of calcium aluminate cement in said ternary hydraulic binder is higher than 33 w%, relative to the total dry weight of the ternary hydraulic binder, and where the content of ternary hydraulic binder is at least 50 w%, relative to the total dry weight of the multicomponent composition.

It has equally been found that where a ternary hydraulic binder used in a multicomponent composition of the present invention consists of Portland cement, calcium sulfate, and calcium sulfoaluminate cement, especially high compressive strength can be achieved where the content by weight of calcium sulfoaluminate cement in said ternary hydraulic binder is higher than the content by weight of Portland cement and where the content of ternary hydraulic binder is at least 50 w%, relative to the total dry weight of the multicomponent composition.

Thus, the compressive strength measured after 90 minutes of applying the multicomponent composition of the present invention can be at least 1.5 times higher as compared to a similar multicomponent composition not according to the invention.

It is another advantage of the present invention that the volumetric shrinkage of inventive multicomponent compositions is very low. Especially it has been found that the linear shrinkage of a multicomponent composition of the present invention after 24 hours of curing can be only one tenth of the linear shrinkage of a similar multicomponent composition not according to the invention.

Multicomponent compositions of the present invention are thus perfectly suited for use in coating, joining, sealing, injecting, anchoring, or grouting operations.

Further aspects of the present invention are subject of the independent claims. Preferred embodiments of the composition are subject of the dependent claims.

### Ways of carrying out the invention

In a first aspect the present invention relates to a multicomponent composition comprising at least one epoxy resin, at least one hardener for said epoxy resin, preferably an amine, and a ternary hydraulic binder, said ternary hydraulic binder consisting of Portland cement, calcium sulfate, and calcium aluminate cement, wherein the content by weight of calcium aluminate cement in said ternary hydraulic binder is higher than the content by weight of Portland cement, characterized in that the content of ternary hydraulic binder is at least 50 w%, relative to the total dry weight of the multicomponent composition, and characterized in that the content of calcium aluminate cement in said ternary hydraulic binder is higher than 33 w%, relative to the total dry weight of the ternary hydraulic binder. Alternatively, the present invention relates to a multicomponent composition comprising at least one epoxy resin, at least one hardener for said epoxy resin, preferably an amine, and a ternary hydraulic binder, said ternary hydraulic binder consisting of Portland cement, calcium sulfate, and calcium sulfoaluminate cement, wherein the content of calcium aluminate cement in said ternary hydraulic binder is higher than the content of Portland cement, characterized in that the content of ternary hydraulic binder is at least 50 w%, relative to the total dry weight of the multicomponent composition.

Throughout the present invention, compound names beginning with "poly" denote substances which formally per molecule contain two or more of the functional groups which occur in their names. The compound may be monomeric, oligomeric, or polymeric. A polyamine, for example, is a compound having two or more amino groups. A polyepoxide is a compound having two or more epoxy groups.

Epoxy resins are polyepoxides, i.e., compounds having two or more epoxide groups. Epoxy resins are preferably oligomeric or polymeric compounds. Epoxy resins are sometimes also used in conjunction with what are known as reactive diluents. Reactive diluents are mono- or polyepoxides. The reactive diluents possess a viscosity lower than the epoxy resin used and serve to reduce the viscosity of the epoxy resin used. The optional reactive diluent is likewise incorporated into the organic binder matrix, and for the purpose of determining the epoxy resin weight is therefore counted here among the epoxy resins.

The epoxide equivalent weight (EEW) can be determined according to DIN 53188 and is reported in g/eq.

Compositions of the present invention are multicomponent compositions. A multicomponent composition comprises a plurality of, more particularly two, three, or more, individual components, which are mixed with one another only shortly before or during use. Before use, the components are stored spatially separated, to prevent spontaneous reaction. For use, the components are mixed with one another. Mixing is followed by the start of inorganic hydration reactions and organic crosslinking reactions, leading ultimately to the curing of the mixture.

The present invention therefore also relates to a kit of parts comprising
(i) a first component (A) comprising at least one epoxy resin,
(ii) a second component (B) comprising at least one hardener for said first component (A), preferably an amine, and
(iii) a third component (C) comprising a ternary hydraulic binder, said ternary hydraulic binder consisting of Portland cement, calcium sulfate, and calcium aluminate cement,
wherein the content of calcium aluminate cement in said third component (C) is higher than the content of Portland cement, characterized in that the content of ternary hydraulic binder is at least 50 w%, relative to the total dry weight of the multicomponent composition, and characterized in that the content of calcium aluminate cement in said third component (C) is higher than 33 w%, relative to the total dry weight of the component (C).

Alternatively, the present invention relates to a kit of parts comprising
(i) a first component (A) comprising at least one epoxy resin,
(ii) a second component (B) comprising at least one hardener for said first component (A), preferably an amine, and
(iii) a third component (C) comprising a ternary hydraulic binder, said ternary hydraulic binder consisting of Portland cement, calcium sulfate, and calcium sulfoaluminate cement,
wherein the content of calcium sulfoaluminate cement in said third component (C) is higher than the content of Portland cement, characterized in that the content of ternary hydraulic binder is at least 50 w%, relative to the total dry weight of the multicomponent composition.

Component (A) in a kit of parts of the present invention comprises at least one epoxy resin and optionally a reactive diluent. The component (A) can be a solid or a liquid component. Preferably the component (A) is a liquid component.

Component (B) in a kit of parts of the present invention comprises at least one hardener for the epoxy resin in component (A). The component (B) is preferably an aqueous component, i.e., it comprises water. The aqueous component (B) is preferably a liquid component. It may be viscous but is generally pourable.

Component (C) in a kit of parts of the present invention is a solid component and is preferably a powder.

According to embodiments, a kit of parts of the present invention is characterized in that it consists of three components (A), (B), and (C) which are stored in spatially separated containers.

The solid component (C) comprises a ternary hydraulic binder. A hydraulic binder within the present context is a binder which sets and hardens in the presence of water in a hydration reaction to form solid hydrates or hydrate phases. In particular, the hydration reactions take place essentially independent of the water content. This means that a hydraulically setting composition can harden and retain its strength even when exposed to water, e.g. underwater or under high humid conditions.

Within the present context, a Portland cement is a cement of the type CEM I, CEM II, CEM III, CEM IV or CEM V according to standard EN 197-1:2018-11. A Portland cement can also be a mixture of these cement types. Portland cements described in alternative standards, e.g. ASTM standards or Chinese standards, are equally suitable. A preferred type of cement is Ordinary Portland Cement of type CEM I according to standard EN 197-1:2018-11.

An aluminate cement within the present context is a cement with a main phase consisting of hydraulic calcium aluminates, whereby the main phase is preferably CA (CaO . Al₂O₃). Depending on the aluminate cement, other calcium aluminates such as CA2, C3A, C12A7 are also present. Aluminate cements of the present invention typically also contain other phases selected from belite (C2S), tricalcium silicate, ferrites (C2F, C2AF, C4AF) and ternesite (C5S2$). Aluminate cements of the present invention may also contain calcium carbonate. In particular, aluminate cements of the present invention correspond to the standard EN 14647:2006-01. Calcium aluminate cement (CAC) is a particularly frequently used type of aluminate cement and is particularly preferred in the context of the present invention. White calcium aluminate cements are also suitable within the present context. Suitable aluminate cements can be obtained commercially from Kerneos SA or Royal White Cement, for example.

A calcium sulfoaluminate cement (CSA) within the present context is a cement with a main phase consisting of C4(A3-xFx)3$ (4 CaO · 3-x Al₂O₃ · x Fe₂O₃ · CaSO₄), where x is an integer from 0 - 3. CSA of the present invention typically contain further phases selected from aluminates (CA, C3A, C12A7), belite (C2S), ferrites (C2F, C2AF, C4AF), ternesite (C5S2$) and calcium sulfate. According to certain embodiments, CSA of the present invention contains 25-75% by weight of Ye'elimit (C4A3$), 0-10% by weight of aluminates, 0-70% by weight of belite, 0-35% by weight of ferrites, and 0-20% by weight of ternesite, in each case based on the total dry weight of the CSA cement. Suitable CSA cements can be purchased commercially from Heidelberg Cement AG, Vicat SA, or under the trade name Calumex from Caltra B.V.

In the context of the present invention, calcium sulfate is understood to be any of anhydrite (CaSO₄), calcium sulfate hemihydrate (CaSO₄ · ½ H₂O), and calcium sulfate dihydrate (CaSO₄ . 2 H₂O). The calcium sulfate hemihydrate includes the alpha- and beta-calcium sulfate hemihydrate. Calcium sulfate of the present invention can be based on REA gypsum, phospho-gypsum, as well as on natural gypsum. It has surprisingly been found that where the ternary hydraulic binder comprises a calcium sulfoaluminate cement, the use of calcium sulfate hemihydrate is beneficial as it leads to a higher compressive strength within 90 minutes. It has also surprisingly been found that the use of alpha calcium sulfate hemihydrate leads to a reduced swelling upon hardening. This can be very beneficial where cracking needs to be prevented or limited. It has furthermore surprisingly been found that the use of beta calcium sulfate hemihydrate leads to a higher expansion upon hardening. This can be very beneficial in case where pre-stressed elements are to be produced.

In a multicomponent composition of the present invention, the content of ternary hydraulic binder is at least 50 w%, relative to the total dry weight of the multicomponent composition.

According to embodiments, the content of calcium aluminate cement, if present, in component (C) of a kit of parts of the present invention is between 33 - 60 w%, preferably 35 - 45 w%, relative to the total dry weight of said component (C).

According to embodiments, the content of calcium sulfoaluminate cement, if present, in component (C) of a kit of parts of the present invention is between 30 - 60 w%, preferably 33 - 40 w%, relative to the total dry weight of said component (C).

It is preferred, that a in a multicomponent composition of the present invention, a weight ratio of calcium aluminate cement, if present, to Portland cement is between 2:1 to 20:1, preferably, 3:1 to 10:1.

It is preferred, that a in a multicomponent composition of the present invention, a weight ratio of calcium sulfoaluminate cement, if present, to Portland cement is between 2:1 to 20:1, preferably, 3:1 to 10:1.

It is preferred that in component (C) of a kit of parts of the present invention, a weight ratio of calcium aluminate cement, if present, to Portland cement is between 2:1 to 20:1, preferably, 3:1 to 10:1.

It is preferred that in component (C) of a kit of parts of the present invention, a weight ratio of calcium sulfoaluminate cement, if present, to Portland cement is between 2:1 to 20:1, preferably, 3:1 to 10:1.

A particularly preferred ternary hydraulic binder of the present invention consists of (in each case relative to the total dry weight of the ternary hydraulic binder):
a) 5 - 10 w% of Portland cement,
b) 10 - 20 w% of calcium sulfate, and
c) 70 - 80 w% of calcium aluminate cement.

Another particularly preferred ternary hydraulic binder of the present invention consists of (in each case relative to the total dry weight of the ternary hydraulic binder):
a) 10 - 25 w% of Portland cement,
b) 10 - 25 w% of calcium sulfate, and
c) 50 - 80 w% of calcium sulfoaluminate cement.

According to embodiments, a multicomponent composition of the present invention or a component (C) of a kit of parts of the present invention additionally comprises latent hydraulic and/or pozzolanic materials. Suitable further latent hydraulic and/or pozzolanic materials are, for example, calcined clay, silica fume, slag volcanic rock, pumice, glass dust, diatomaceous earth, fumed silica, precipitated silica, fly ash, and/or burnt slate.

According to certain embodiments, a multicomponent composition of the present invention or a component (C) of a kit of parts of the present invention additionally comprises 1 - 10 w% of pozzolanic and/or latent hydraulic materials, preferably of calcined clay, silica fume, slag, in each case relative to the total dry weight of the multicomponent composition.

A multicomponent composition of the present invention or a component (C) of a kit of parts of the present invention may additionally comprise at least one further additive selected from accelerators, retarders, plasticizers, superplasticizers, thickeners, defoamers, air-entrainers, biocides, pigments, corrosion inhibitors, shrinkage reducing agents, water retention agents, corrosion inhibitors, hydrophobizing agents, chromate reducers, and surfactants.

The fraction of the additives in a multicomponent composition of the present invention or in a component (C) of a kit of parts of the present invention, based on the total dry weight of the multicomponent composition or of the component (C), ought preferably not to exceed 10 w%. More preferably the total amount of the additives ought to be 5 w% or less, more particularly 3 w% or less.

In some embodiment, a multicomponent composition of the present invention or a component (C) of a kit of parts of the present invention may optionally comprise a polymeric binder which is solid at 23°C. The solid polymeric binder can be used to gain further improvements in properties such as adhesive strength, for example. The solid polymeric binder is preferably a binder based on a water-dispersible powder. The polymeric binder may further comprise small amounts of an emulsifier, such as polyvinyl alcohol. The particle size of the solid polymeric binder is preferably in the range from 0.1 to 50 µm, more preferably in the range from 1 to 15 µm.

The polymeric binder which is solid at 23°C is preferably an ethylene-vinyl acetate copolymer which may optionally comprise one or more further comonomers. If used, the polymeric binder which is solid at 23°C is present in the multicomponent composition preferably with an amount of 0.1 to 10 w%, more preferably 0.25 to 3 w%, based on the total dry weight of the multicomponent composition. Solid polymeric binders of this kind are available commercially, examples being the Vinnapas^{®} products from Wacker AG.

A multicomponent composition of the present invention or at least one of components (A), (B), and (C), preferably component (C), of a kit of parts of the present invention may further comprise aggregates and/or fillers. Aggregates or fillers can be any material that is non-reactive in the hydration reaction of hydraulic binders. Aggregates or fillers can be any material typically used for hydraulically setting compositions. Typical aggregates are for example rock, crushed stone, gravel, slag, sand, especially quartz sand, river sand and/or manufactured sand, recycled concrete, glass, expanded glass, hollow glass beads, glass ceramics, volcanic rock, pumice, perlite, vermiculite, quarry wastes, raw, fired or fused earth or clay, porcelain, electrofused or sintered abrasives, firing support, silica xerogels, and bio-based fillers, such as for example parts of plants. Typical fillers include ground limestone, ground dolomite, and/or ground aluminum oxide. Aggregates or fillers useful for the present invention can have any shape and size typically encountered for such materials. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1. According to embodiments, at least part of the sand used for a multicomponent composition of the present invention is quartz sand, river sand, manufactured sand, for example from granite or limestone, or mixtures thereof. According to a preferred embodiment, river sand is used for a multicomponent composition of the present invention, since it is chemically inert, strong, available in various sizes and the workability of the composition can be set advantageously.

The particle size of the aggregates and/or fillers is preferably relatively small, i.e., less than 5 mm. The aggregates or fillers may have for example a particle size in the range from 0.05 mm to 2.5 mm, with particular preference being given to sand, especially silica sand. For example, the use of sand with a particle size in the range from 0.05 to 0.3 mm, 0.1 to 0.7 mm, 0.3 to 0.9 mm, 0.6 to 1.0 mm, 0.7 mm to 1.2 mm, and 1.5 to 2.2 mm, or of a mixture thereof, is associated with advantages. The particle size may be determined with the aid of sieve analysis according to standard ASTM C136/C136M-19.

The aggregate and/or filler content may vary within wide ranges, but is preferably at least 35 w%, more preferably at least 50 w%, and with preference at least 57 w%, there being preferably not more than 90 w% and more preferably not more than 89 w% or not more than 85 w% of fillers present, in each case relative to the total dry weight of the multicomponent composition of the present invention or the total dry weight of the kit of parts of the present invention.

According to preferred embodiments, a multicomponent composition of the present invention comprises (in each case relative to the total weight of the multicomponent composition):
a) 1 - 5 w%, preferably 1.5 - 3.5 w% of at least one epoxy resin,
b) 1 - 5 w%, preferably 1.1 - 2.6 w% of at least one hardener for said epoxy resin, preferably an amine,
c) 50 - 70 w%, preferably 50 - 60 w% of a ternary hydraulic binder, and
d) 28 - 48 w% of aggregates and/or fillers,
said ternary hydraulic binder consisting of (in each case relative to the total dry weight of the ternary hydraulic binder):
c1) 5 - 10 w% of Portland cement,
c2) 10 - 20 w% of calcium sulfate, and
c3) 70 - 80 w% of calcium aluminate cement.

According to other preferred embodiments, a multicomponent composition of the present invention comprises (in each case relative to the total weight of the multicomponent composition):
a) 1 - 5 w%, preferably 1.5 - 3.5 w% of at least one epoxy resin,
b) 1 - 5 w%, preferably 1.1 - 2.6 w% of at least one hardener for said epoxy resin, preferably an amine,
c) 50 - 70 w%, preferably 50 - 60 w% of a ternary hydraulic binder, and
d) 28 - 48 w% of aggregates and/or fillers,
said ternary hydraulic binder consisting of (in each case relative to the total dry weight of the ternary hydraulic binder):
c1) 10 - 25 w% of Portland cement,
c2) 10 - 25 w% of calcium sulfate, and
c3) 50 - 80 w% of calcium sulfoaluminate cement.

One epoxy resin or a mixture of two or more epoxy resins may be used in a multicomponent composition or in component (A) of a kit of parts of the present invention. Epoxy resins which may be used are all epoxy resins customary within epoxy chemistry. Epoxy resins may be prepared, for example, in a known way from the oxidation of the corresponding olefins or from the reaction of epichlorohydrin with the corresponding polyols or polyphenols.

Epoxy resins can be divided into liquid epoxy resins and solid epoxy resins. According to preferred embodiments, in a multicomponent composition or in a kit of parts of the present invention the at least one epoxy resin is a solid epoxy resin.

The epoxy resin may have an epoxy equivalent weight, for example, of 156 to 500 g/eq. The epoxy resin is preferably a diepoxide. The epoxy resin can be a solid or a liquid resin.

In one embodiment, the epoxy resin is an aromatic epoxy resin. Examples of resins suitable for this purpose are liquid epoxy resins of the formula (I), 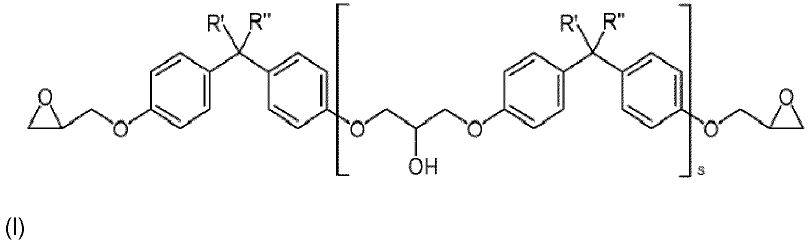 where R' and R" independently of one another are each a hydrogen atom or a methyl group, and s is on average a value from 0 to less than 2 and preferably 0 to 1. Preferred liquid resins are those of the formula (I) in which the index s is on average a value of less than 0.2.

The epoxy resins of the formula (I) are diglycidyl ethers of bisphenol A, bisphenol F and bisphenol A/F, with A being acetone and F being formaldehyde, which serve as reactants for the preparation of these bisphenols. Liquid epoxy resins of this kind are available commercially, as for example under the designations Araldite^{®} from Huntsman, D.E.R.^{®} from Dow, Epikote^{®} from Momentive, Epalloy^{®} from CVC, Chem Res^{®} from Cognis, or Beckopox^{®} from Cytec.

Further suitable aromatic epoxy resins are the products of glycidylization of:
- dihydroxybenzene derivatives such as resorcinol, hydroquinone, and pyrocatechol;
- other bisphenols or polyphenols;
- condensation products of phenols with formaldehyde, obtained under acidic conditions, such as phenol novolaks or cresol novolaks;
- aromatic amines, such as aniline, toluidine, 4-aminophenol, 4,4'-methylenediphenyldiamine (MDA), 4,4'-methylenediphenyldi(N-methyl)amine, 4,4'-[1,4-phenylene-bis(1-methylethylidene)]bisaniline (bisaniline-P), 4,4'-[1,3-phenylene-bis(1-methylethylidene)]bisaniline (bisaniline-M).

In a further embodiment, the epoxy resin is an aliphatic or cycloaliphatic epoxy resin, such as, for example
- diglycidyl ether;
- a glycidyl ether of a saturated or unsaturated, branched or unbranched, cyclic or open-chain C₂ to C₃₀ diol, such as ethylene glycol, propylene glycol, butylene glycol, hexanediol, octanediol, a polypropylene glycol, dimethylolcyclohexane, neopentyl glycol, for example;
- a glycidyl ether of a tri- or tetrafunctional, saturated or unsaturated, branched or unbranched, cyclic or open-chain polyol such as castor oil, trimethylolpropane, trimethylolethane, pentaerythritol, sorbitol, or glycerol, and also alkoxylated glycerol or alkoxylated trimethylolpropane;
- a hydrogenated liquid bisphenol A, F or A/F resin, and/or the products of glycidylization of hydrogenated bisphenol A, F or -A/F;
- an N-glycidyl derivative of amides or heterocyclic nitrogen bases, such as triglycidyl cyanurate and triglycidyl isocyanurate, and also reaction products of epichlorohydrin and hydantoin.

Further examples of epoxy resins that can be used are epoxy resins prepared from the oxidation of olefins, as for example from the oxidation of vinylcyclohexene, dicyclopentadiene, cyclohexadiene, cyclododecadiene, cyclododecatriene, isoprene, 1,5-hexadiene, butadiene, polybutadiene, or divinylbenzene.

Other examples of epoxy resins which can be used are a solid bisphenol A, F or A/F resin constructed in the same way as for the aforementioned liquid epoxy resins of the formula (I), but with the index s having a value from 2 to 12. Other examples are all aforementioned epoxy resins, given a hydrophilic modification through reaction with at least one polyoxyalkylene polyol.

Preferred as epoxy resin are liquid resins, especially diepoxides, based on a bisphenol, more particularly based on bisphenol A, bisphenol F or bisphenol A/F, more preferably bisphenol F- and/or bisphenol A-epichlorohydrin resin, of the kind available commercially for example from Dow, Huntsman, and Hexion. These liquid resins have a viscosity which is low for epoxy resins, and in the cured state feature good properties as coatings. They may be used optionally in combination with solid bisphenol A resin or bisphenol F-Novolak-epoxy resin.

A multicomponent composition or a kit of parts of the present invention may optionally comprise a reactive diluent. If present, the reactive diluent is comprised in component (A) of a kit of parts of the present invention. This diluent, as stated above, is counted as part of the epoxy resin for the epoxy resin weight. One or more reactive diluents may be used. Suitable reactive diluents are mono- and polyepoxides. The addition of a reactive diluent to the epoxy resin has the effect of reducing the viscosity, and also, in the cured state of the epoxy resin composition, of reducing the glass transition temperature and the mechanical values.

Examples of reactive diluents are glycidyl ethers of mono- or polyhydric phenols and aliphatic or cycloaliphatic alcohols, such as, in particular, the polyglycidyl ethers of diols or polyols, already stated as aliphatic or cycloaliphatic epoxy resins, and also, furthermore, in particular, phenyl glycidyl ether, cresyl glycidyl ether, p-n-butylphenyl glycidyl ether, p-tert-butylphenyl glycidyl ether, nonylphenyl glycidyl ether, allyl glycidyl ether, butyl glycidyl ether, hexyl glycidyl ether, 2-ethylhexyl glycidyl ether, and also glycidyl ethers of natural alcohols, such as, for example, C₈ to C₁₀ alkyl glycidyl ethers, C₁₂ to C₁₄ alkyl glycidyl ethers, or C₁₃ to C₁₅ alkyl glycidyl ethers, available commercially as Erisys^{®} GE-7, Erisys^{®} GE-8 (from CVC), or as Epilox^{®} P 13 - 19 (from Leuna).

According to embodiments, the epoxy resin is used in the form of an aqueous dispersion. It is possible that the epoxy resin is an epoxy resin emulsion, a so-called "emulsifiable epoxy resin", or an epoxy resin suspension.

An epoxy resin dispersion comprises preferably, besides water, at least one epoxy resin, as stated above, and additionally at least one emulsifier, more particularly a nonionic emulsifier. Epoxy resin dispersions or emulsions may have a solids content, for example, in the range from 40 - 70 w%.

Commercial epoxy resin dispersions are, for example, Sika^{®} Repair / Sikafloor^{®} EpoCem^{®} Modul A (from Sika Schweiz AG), Araldite^{®} PZ 323, Araldite^{®} PZ 756/67, Araldite^{®} PZ 3961 (from Huntsman), XZ 92598.00, XZ 92546.00, XZ 92533.00 (from Dow), Waterpoxy^{®} 1422, Waterpoxy^{®} 1455 (from Cognis), Beckopox^{®} EP 384w, Beckopox^{®} EP 385w, Beckopox^{®} EP 386w, Beckopox^{®} EP 2340w, Beckopox^{®} VEP 2381w (from Cytec).

An emulsifiable epoxy resin preferably comprises at least one emulsifier, as already mentioned above as a constituent of an epoxy resin dispersion. Commercial emulsifiable epoxy resins are, for example, Araldite^{®} PY 340 and Araldite^{®} PY 340-2 (from Huntsman), Beckopox^{®} 122w and Beckopox^{®} EP 147w (from Cytec).

According to embodiments, in a kit of parts of the present invention, the component (A) is aqueous, with the weight ratio of epoxy resin, including any reactive diluent, to water being preferably in the range from 3:1 to 1:1. The epoxy resin is preferably emulsifiable in water.

The component (A) of a kit of parts of the present invention may optionally comprise one or more other additives. Suitable additives are elucidated further on below.

According to preferred embodiments, the at least one hardener for the at least one epoxy resin comprises, preferably consists of, at least one amine compound.

The amine compound as amine hardener may be any amine compound commonly used in the art as a hardener for epoxy resins. Such hardeners are available commercially. One amine compound or two or more amine compounds may be used. Suitable in principle as amine compounds are monoamines, provided the amine is a primary amine, but compounds having at least two amine groups are more preferred. The amino groups may be primary and/or secondary amino groups.

Preferred amine compounds as amine hardeners are polyamines, this also including polyaminoamides and adducts with polyepoxides. Examples of suitable amine compounds as amine hardeners are therefore a polyamine, a polyaminoamide, a polyamine-polyepoxide adduct, or a polyaminoamide-polyepoxide adduct, and mixtures thereof, each preferably comprising at least two amino groups. Suitable polyamines are aliphatic, cycloaliphatic, heterocyclic, and aromatic polyamines. The polyamine used as amine hardener is preferably a water-soluble or water-dispersible polyamine, including corresponding polyaminoamides and adducts with polyepoxides.

Particularly suitable polyamines are especially the following polyamines:
- aliphatic, cycloaliphatic or arylaliphatic primary diamines;
- aliphatic, cycloaliphatic or arylaliphatic primary triamines, especially 4-aminomethyl-1,8-octanediamine, 1,3,5-tris(aminomethyl)benzene, 1,3,5-tris(aminomethyl)cyclohexane, tris(2-aminoethyl)amine, tris(2-aminopropyl)amine, tris(3-aminopropyl)amine;
- aliphatic primary diamines containing ether groups, especially bis(2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine and higher oligomers of these diamines, bis(3-aminopropyl)polytetrahydrofurans and other polytetrahydrofurandiamines, and polyoxyalkylenediamines. The latter are typically products from the amination of polyoxyalkylenediols and are obtainable, for example, under the Jeffamine^{®} name (from Huntsman), under the Polyetheramine name (from BASF) or under the PC Amine^{®} name (from Nitroil). Especially suitable polyoxyalkylenediamines are Jeffamine^{®} D 230, Jeffamine^{®} D 400, Jeffamine^{®} D 2000, Jeffamine^{®} D 4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramine D 230, Polyetheramine D 400 and Polyetheramine D 2000, PC Amine^{®} DA 250, PC Amine^{®} DA 400, PC Amine^{®} DA 650 and PC Amine^{®} DA 2000;
- primary polyoxyalkylenetriamines, which are typically products from the amination of polyoxyalkylenetriols and are obtainable, for example, under the Jeffamine^{®} trade name (from Huntsman), under the Polyetheramine name (from BASF) or under the PC Amine^{®} name (from Nitroil), for example Jeffamine^{®} T 403, Jeffamine^{®} T 3000, Jeffamine^{®} T 5000; Polyetheramine T403, Polyetheramine T5000 and PC Amine^{®} TA 403;
- polyamines having tertiary amino groups and having two primary aliphatic amino groups, such as, in particular, N,N'-bis(aminopropyl)piperazine, N,N-bis(3-aminopropyl)methylamine, N,N-bis(3-aminopropyl)ethylamine, N,N-bis(3-aminopropyl)propylamine, N,N-bis(3-aminopropyl)cyclohexylamine, N,N-bis(3-aminopropyl)-2-ethylhexylamine, and also the products from the double cyanoethylation and subsequent reduction of fatty amines derived from natural fatty acids, such as N,N-bis(3-aminopropyl)dodecylamine and N,N-bis(3-aminopropyl)tallowalkylamine, obtainable as Triameen^{®} Y12D and Triameen^{®} YT (from Akzo Nobel);
- polyamines having tertiary amino groups and having three primary aliphatic amino groups, such as, in particular, tris(2-aminoethyl)amine, tris(2-amino-propyl)amine and tris(3-aminopropyl)amine;
- polyamines having secondary amino groups and having two primary aliphatic amino groups, such as, in particular, 3-(2-aminoethyl)amino-propylamine, bishexamethylenetriamine (BHMT), diethylenetriamine (DETA), triethylenetetramine (TETA), tetraethylenepentamine (TEPA), pentaethylenehexamine (PEHA) and higher homologs of linear polyethylenamines such as polyethylenepolyamine having 5 to 7 ethylenamine units (known as "higher ethylenepolyamine", HEPA), products from the multiple cyanoethylation or cyanobutylation and subsequent hydrogenation of primary di- and polyamines having at least two primary amino groups, such as dipropylenetriamine (DPTA), N-(2-aminoethyl)-1,3-propanediamine (N3 amine), N,N'-bis(3-aminopropyl)ethylenediamine (N4 amine), N,N'-bis(3-aminopropyl)-1,4-diaminobutane, N5-(3-aminopropyl)-2-methyl-1,5-pentanediamine, N3-(3-aminopentyl-1,3-pentanediamine, N5-(3-amino-1-ethylpropyl)-2-methyl-1,5-pentanediamine and N,N'-bis(3-amino-1-ethylpropyl)-2-methyl-1,5-pentanediamine;
- polyamines having one primary and one secondary amino group, such as, in particular, N-methyl-1,2-ethanediamine, N-ethyl-1,2-ethanediamine, N-butyl-1,2-ethanediamine, N-hexyl-1,2-ethanediamine, N-(2-ethylhexyl)-1,2-ethanediamine, N-cyclohexyl-1,2-ethanediamine, 4-aminomethylpiperidine, N-(2-aminoethyl)piperazine, N-methyl-1,3-propanediamine, N-butyl-1,3-propanediamine, N-(2-ethylhexyl)-1,3-propanediamine, N-cyclohexyl-1,3-propanediamine, 3-methylamino-1-pentylamine, 3-ethylamino-1-pentylamine, 3-cyclohexylamino-1-pentylamine, fatty diamines such as N-cocoalkyl-1,3-propanediamine and products from the Michael-like addition reaction of primary aliphatic diamines with acrylonitrile, maleic diesters or fumaric diesters, citraconic diesters, acrylic and methacrylic esters, acryl- and methacrylamides and itaconic diesters, converted in a molar ratio of 1:1, and additionally products from the partial reductive alkylation of primary aliphatic polyamines with benzaldehyde or alter aldehydes or ketones, and partially styrenized polyamines such as Gaskamine^{®} 240 (from Mitsubishi Gas Chemical (MGC));
- aromatic polyamines, such as, in particular, m- and p-phenylenediamine, 4,4'-, 2,4' and 2,2'-diaminodiphenylmethane, 3,3'-dichloro-4,4'-diaminodiphenylmethane (MOCA), tolylene-2,4- and -2,6-diamine, mixtures of 3,5-dimethylthiotolylene-2,4- and
- 2,6-diamine (obtainable as Ethacure^{®} 300 from Albemarle), mixtures of 3,5-diethyl-2,4- and -2,6-tolylenediamine (DETDA), 3,3',5,5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5,5'-dimethyl-4,4'-diaminodiphenylmethane (M-MIPA), 3,3',5,5'-tetraisopropyl-4,4'-diaminodiphenylmethane (M-DIPA), 4,4'-diaminodiphenyl sulfone (DDS), 4-amino-N-(4-aminophenyl)benzenesulfon-amide, 5,5'-methylenedianthranilic acid, dimethyl 5,5'-methylene-dianthranilate, propylene 1,3-bis(4-aminobenzoate), butylene 1,4-bis(4-aminobenzoate), polytetramethylene oxide bis(4-aminobenzoate) (obtainable as Versalink^{®} from Air Products), 1,2-bis(2-aminophenylthio)-ethane, 2-methylpropyl 4-chloro-3,5-diaminobenzoate and tert-butyl 4-chloro-3,5-diaminobenzoate;
- adducts of the polyamines mentioned with epoxides and epoxy resins, especially adducts with diepoxides in a molar ratio of at least 2/1, adducts with monoepoxides in a molar ratio of at least 1/1, and reaction products of amines and epichlorohydrin, especially that of 1,3-bis(aminomethyl)-benzene, commercially available as Gaskamine^{®} 328 (from MGC);
- polyamidoamines which are reaction products of a mono- or polybasic carboxylic acid, or the esters or anhydrides thereof, especially of a dimer fatty acid, and an aliphatic, cycloaliphatic or aromatic polyamine used in a stoichiometric excess, especially a polyalkylenamine, for example DETA or TETA, especially the commercially available polyamidoamines Versamid^{®} 100, 125, 140 and 150 (from Cognis), Aradur^{®} 223, 250 and 848 (from Huntsman), Euretek^{®} 3607 and 530 (from Huntsman) and Beckopox^{®} EH 651, EH 654, EH 655, EH 661 and EH 663 (from Cytec); and
- phenalkamines, also called Mannich bases, which are reaction products of a Mannich reaction of phenols, especially cardanol, with aldehydes, especially formaldehyde, and polyamines, especially the commercially available phenalkamines Cardolite^{®} NC-541, NC-557, NC-558, NC-566, Lite 2001 and Lite 2002 (from Cardolite), Aradur^{®} 3440, 3441, 3442 and 3460 (from Huntsman) and Beckopox^{®} EH 614, EH 621, EH 624, EH 628 and EH 629 (from Cytec).

Preferred polyamines are polyamines selected from the group consisting of 1,3-pentanediamine (DAMP), 1,5-diamino-2-methylpentane (MPMD), 2-butyl-2-ethyl-1,5-pentanediamine (C11 neodiamine), 1,6-hexanediamine, 2,2,4- and 2,4,4-trimethylhexamethylenediamine (TMD), 1,2-dodecanediamine, 1,3-diaminocyclohexane, bis(4-aminocyclohexyl)methane (H12-MDA), bis(4-amino-3-methylcyclohexyl)methane, 1-amino-3-aminomethyl-3,5,5-trimethyl-cyclohexane (IPDA), 1,3-bis(aminomethyl)cyclohexane, 1,3-bis(aminomethyl)-benzene (MXDA), bishexamethylenetriamine (BHMT), diethylenetriamine (DETA), triethylenetetramine (TETA), tetraethylenepentamine (TEPA), pentaethylenehexamine (PEHA) and higher homologs of linear polyethylenamines such as polyethylenepolyamine having 5 to 7 ethylenamine units (HEPA), dipropylenetriamine (DPTA), N-(2-aminoethyl)-1,3-propanediamine (N3 amine), N,N'-bis(3-aminopropyl)ethylenediamine (N4 amine), polyoxyalkylenediamines and polyoxyalkylenetriamines having a molecular weight in the range from 200 to 500 g/mol, especially the Jeffamine^{®} D-230, Jeffamine^{®} D-400 and Jeffamine^{®} T-403 types, polyanilidoamines, phenalkamines, compounds of the polyamines mentioned which have been fully or partially alkylated at primary amino groups, and adducts of the polyamines mentioned with epoxides and epoxy resins. These preferred polyamines have particularly good compatibility with epoxy resins.

Polyamines very particularly preferred in connection with the present invention are aliphatic polyamines. An especially preferred amine is 1-amino-3-aminomethyl-3,5,5-trimethylcyclohexane, alone or in a mixture with 2,2'-dimethyl-4,4'-methylene(cyclohexanamine).

Optionally there may be one or more additives present in the component (B) of a kit of parts of the present invention, such as defoamers in particular. Other suitable optional additives for the component (B) are elucidated later on below.

It is preferred for the component (B) of a kit of parts of the present invention to comprise 1 to 25 w%, preferably 2 to 20 w%, of the at least one amine compound as amine hardener. The balance fraction to 100 w% consists in this case preferably of water and optionally one or more additives, such as defoamers.

Further optional additives which may be present in the component (A) and/or in the component (B) of a kit of parts of the present invention are additives customarily used within this field, such as, for example, nonreactive diluents, solvents, or film-forming assistants; reactive diluents and extenders, examples being reactive diluents containing epoxide groups, as already mentioned above; polymers, thermoplastic polymers; inorganic and organic fillers, such as ground or precipitated calcium carbonates, barite, talcs, finely ground quartzes, silica sand, dolomites, wollastonites, kaolins, micas, aluminum oxides, aluminum hydroxides, silicas, PVC powders, or hollow beads, for example; fibers; accelerators which accelerate the reaction between amino groups and epoxide groups, examples being acids or compounds that can be hydrolyzed to acids; tertiary amines and salts thereof; quaternary ammonium salts; rheology modifiers, such as thickeners, for example; adhesion promoters, such as organoalkoxysilanes, for example; stabilizers to counter heat, light, or UV radiation; flame retardants; surface-active substances, such as wetting agents, flow control agents, deaerating agents, or defoamers, for example; and biocides.

The total amount of epoxy resin, including any reactive diluent used, and of amine hardener in the multicomponent composition or in the kit of parts of the present invention may vary within wide ranges. However, it can be preferred to limit the amount of organic matter. This may, for example, be the case where VOC emissions have to be controlled. It is, however, also possible to select suitable epoxy resins and amine hardeners for that purpose. It is thus possible to limit the total content of epoxy resin and amine hardener to not more than 7.5 w%, preferably not more than 5.5 w%, more preferably not more than 4 w% or not more than 3 w%, based on the total weight of the multicomponent composition. The total amount of epoxy resin, including any reactive diluent used, and of amine hardener in the multicomponent composition is preferably at least 0.1 w%, more preferably at least 0.5 w%, especially at least 1.5 w%, based on the total weight of the multicomponent composition.

According to certain embodiments, the multicomponent composition of the present invention is characterized in that the total amount of epoxy resin and amine hardener in the multicomponent composition, based on the total weight of the multicomponent composition, is between 0.1 - 7.5 w%, preferably 0.5 - 5.5 w%, more preferably 1.5 - 5.5 w%, especially 1.5 - 3 w%.

As already mentioned above, it is preferred for the component (A) and/or the component (B) to comprise water. Especially, it is preferred that the amount of water present in components (A) and/or (B) is sufficient to cure the ternary hydraulic binder which is present in component (C). More preferably the component (A) and the component (B) comprise water, with the amount of water present in components (A) and (B) preferably being sufficient to cure the ternary hydraulic binder.

Thus, according to especially preferred embodiments, the first component (A) and/or the second component (B) comprise water, the amount of water present in components (A) and/or (B) preferably being sufficient to cure the ternary hydraulic inorganic binder present in component (C).

The weight ratio of components (A), (B), and (C) in a kit of parts of the present invention may vary within a wide range. The ratio of component (A) to component (B) is preferably selected such that the stoichiometric ratio of amine functionality to epoxide functionality is in the range from 1.1 : 1 to 0.9 : 1. Preferably the ratio is approximately 1 : 1.

It is further preferred the component (C) constitutes the major fraction of the kit of parts. Preferably, the component (C) is present in a kit of parts of the present invention in about 65 to about 90 w%, relative to the total weight of the kit of parts.

According to certain embodiments a kit of parts of the present invention is characterized in that (in each case relative to the total weight of the kit of parts):
(i) the first component (A) is present in an amount of 1 - 10 w%, preferably 2 - 6 w%,
(ii) the second component (B) is present in an amount of 2 - 20 w% mass parts, preferably 3 - 10 w%
(iii) the third component (C) is present in an amount of 70 - 97 w%, preferably 84 - 95 w%.

The water needed to cure the ternary hydraulic binder may be present, for example, wholly or partly as a standalone component, which is only added when the components are mixed prior to use, to set the desired quantity of water. Preferably, however, the required quantity of water is already present in component (A) and/or in component (B).

According to preferred embodiments, in a multicomponent composition of the present invention or in a kit of parts of the present invention, a weight ratio of ternary hydraulic binder to epoxy resin is between 10:1 to 50:1, preferably 15:1 to 40:1.

According to embodiments, in a multicomponent composition of the present invention or in a kit of parts of the present invention additionally water is present. It is highly preferable that the amount of water present is sufficient to completely cure the ternary hydraulic binder. In a kit of parts of the present invention, the water is preferably comprised in components (A) and/or (B) while component (C) is essentially free of water. This increases the shelf life of the kit of parts. According to preferred embodiments, water is present in a multicomponent composition of the present invention or in a kit of parts of the present invention in an amount to realize a water to powder weight ratio of between 0.3 to 0.4.

In a second aspect the present invention relates to a method for coating, joining, sealing, injecting, anchoring, or grouting substrates with a multicomponent composition as described above, the method comprising the following steps:
a) mixing the at least one epoxy resin and the at least one hardener for said epoxy resin, preferably an amine,
b) adding the ternary hydraulic binder with stirring,
c) processing the mixture obtained in step b) by
   c1) applying to the surface of one or more components for coating, or
   c2) applying to the surface of one or more components and placing one or more further components onto the applied processable mixture to join the components, or
   c3) introducing the processable mixture into the space between two or more components for sealing or grouting,
d) optionally smoothing and/or deaerating the applied or introduced mixture, and
e) curing the mixture,
where water is present in the multicomponent composition and/or is added as a separate component before or during the addition of the ternary hydraulic binder.

According to embodiments, the method as described above is characterized in that in step a) one or more additional liquid components are admixed and/or in step b) one or more additional solid components are admixed.

The processing of the binder mixture in step c) and/or the curing in step e) may take place for example at temperatures in the range from 5 to 50°C.

The substrates for coating, joining, sealing, injecting, anchoring, or grouting may be of any desired material, more particularly the materials customary for building, such as concrete, stones, masonry, rendering, wood, glass, or metal, for example.

The substrates preferably comprises a floor, made of concrete, mortar, screed, or stones, for example, with the coating of the composition of the invention forming a floor covering. With particular preference it is a self-leveling floor covering. The floor may have been provided with a priming coat. A further possibility is to apply a topcoat as seal to the cured binder mixture applied.

For the joining, sealing, or grouting of components, the multicomponent composition of the invention may be used in a customary way, as mortar or repair mortar, for example.

The curing reaction begins with the mixing of the multicomponent composition. The epoxy groups of the epoxy resin and optionally of the reactive diluent react with the amine groups to form the organic binder matrix, while the hydraulic inorganic binder with the water forms the inorganic binder matrix, involving hydration reactions; as a result of all of these reactions, the composition ultimately cures.

Accordingly, the present invention also relates to a product comprising one or more substrates coated, joined, sealed, or grouted with a cured processable mixture, obtained by a method as described above.

Uses of a multicomponent composition of the present invention or of a kit of parts of the present invention include the use a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, a material for structural bonding of concrete structures, an anchoring mortar, or an injection grout. Especially, to the use as an anchoring mortar or as an injection grout.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. A material for structural bonding of concrete structures is especially according to standard EN 1504-4. An anchoring mortar is especially according to standard EN 1504-6. An injection grout is especially according to EN 1504-5.

The present invention thus relates to the use of a multicomponent composition of the present invention or of a kit of parts of the present invention as a self-leveling flooring compound. Especially as a self-leveling flooring compound according to standard EN 13813.

The present invention thus relates to the use of a multicomponent composition of the present invention or of a kit of parts of the present invention as a mortar. Especially as a repair mortar according to standard EN 1504-3, a masonry mortar according to standard EN 998-2, or a thin joint mortar according to standard EN 998-2.

The present invention also relates to the use of a a multicomponent composition of the present invention or of a kit of parts of the present invention in a system according to principles 3, 4, and 7 of EN 1504-3 or in a system according to EN 1504-6.

The present invention also relates to the use of a a multicomponent composition of the present invention or of a kit of parts of the present invention in a system according to EN 1504-5.

Finally, the present invention relates to the use of a multicomponent composition of the present invention or of a kit of parts of the present invention as a grout according to DAfStb guideline VeBMR or as a class A, B, C non-shrink grout according to ASTM C1107.

DIN EN 1504-3 relates to products and systems for the protection and repair of concrete structures. Principle 3 relates to concrete restoration, principle 4 relates to structural strengthening, principle 7 relates to the preservation of restoration of passivity. A multicomponent composition of the present invention or of a kit of parts of the present invention is thus especially suitable for the use as a mortar for concrete restoration, as well as mortar, concrete or crack filler for structural strengthening, as well as to increase the cover over rebars or to replace carbonated concrete.

EN 1504-6 relates to products and systems to be used for the anchoring of reinforcing steel bars. A multicomponent composition of the present invention or of a kit of parts of the present invention is thus suitable to be used for the anchoring of reinforcing steel bars. Guideline VeBMR of the DAfStb relates to grouting materials with high early strength and compressive strength class C50/60 or higher. A multicomponent composition of the present invention or of a kit of parts of the present invention is thus suitable to be used as supplementary concrete material and cement mortar in thin layers, for example for the grouting of joints or the concreting of columns in sleeve foundations.

In a last aspect the present invention relates to a solid component for use in a multicomponent composition as described above or in a kit of parts as described above, said solid component comprising (in each case relative to the total dry weight of the solid component):
a) 50 - 70 w% of a ternary hydraulic binder, and
b) 30 - 50 w% of aggregates and/or fillers,
said ternary hydraulic binder consisting of (in each case relative to the total dry weight of the ternary hydraulic binder):
a1) 5 - 10 w% of Portland cement,
a2) 10 - 20 w% of calcium sulfate, and
a3) 70 - 80 w% of calcium aluminate cement or of calcium sulfoaluminate cement.

Any embodiments described above also applies in case of this aspect. Optionally further additives as described above may additionally be present.

The following examples will provide the person skilled in the art with additional means to put the present invention into practice. However, these examples are in no way intended to limit the scope of the invention.

### Examples

Components used for producing the compositions were as follows.

### Component A

Aqueous emulsion consisting of 58.8 w% epoxy resin (diglycidyl ethers of bisphenol A and bisphenol F in weight ratio 2.3:1), 36 w% of water, 3.9 w% of reactive diluent, and 1.3 w% of emulsifier.

### Component B

Mixture of 18 w% of modified amine hardener based on 3-aminomethyl-3,5,5-trimethylcyclohexylamine (isophorondiamine), 0.75 w% defoamer, and 81.25 w% water.

### Component C

Solid components C were prepared according to the following table 2 by thoroughly mixing all raw materials. The following table 1 shows additional details of the raw materials used.

**Table 1: Raw materials used for component C**

| | |
|---|---|
| OPC | Portland cement CEM I 52.5 R |
| CAC | Ternal LC or Ternal white from Kerneos |
| CSA | Alipre from Heidelberg Cement |
| CaSO₄ | Anhydrite fine from Solvay |
| Sand 1 | Silica sand (0.1 - 0.7 mm) |
| Sand 2 | Silica sand (0.6 - 1.0 mm) |
| Metakaolin | Metamax from BASF |
| Ca(OH)₂ | Sigma Aldrich (>95% purity) |
| Li₂CO₃ | Sigma Aldrich (> 99% purity) |
| Sodium gluconate | Sigma Aldrich (> 99% purity) |
| Solid epoxy | Resin Cardolite NX-2004-40 |
| Additives | Mixture of PCE (poly-co-(methacrylate-acrylate) with ethylene glycol side chains), defoamer (fatty alcohol alkoxylate and polysiloxane), tartaric acid, and stabilizer |

In the following table 2 compositions C-1 to C-3 are compositions according to the present invention. C-4 to C-6 are comparative compositions, not according to the present invention.

**Table 2: Components C, all numbers refer to weight-%**

| | **C-1** | **C-2** | **C-3** | **C-4** | **C-5** | **C-6** |
|---|---|---|---|---|---|---|
| OPC | 4.5 | 4.5 | 10.1 | 6 | 6 | 6 |
| CaSO₄ | 9 | 9 | 10.1 | 8 | 10 | 12 |
| CAC | 37* | 37* | | 14** | 17** | 20** |
| CSA | | | 32.8 | | | |
| Li₂CO₃ | 0.1 | 0.1 | 0.1 | 0.1 | 0.1 | 0.1 |
| Sand 1 | 22.7 | 21.9 | 21.2 | 30.3 | 30.3 | 30.3 |
| Sand 2 | 22.7 | 22 | 21.2 | 30.4 | 30.4 | 30.4 |
| CaCO₃ | | | | 10 | 5 | 0 |
| Metakaolin | 2 | 2 | 2 | | | |
| Ca(OH)₂ | 0.2 | 0.2 | 0.2 | 0.2 | 0.2 | 0.2 |
| Additives | 1.8 | 1.8 | 2.3 | 1.0 | 1.0 | 1.0 |
| Solid epoxy | | 1.5 | | | | |

| | | | | | | |
|---|---|---|---|---|---|---|
| * Ternal LC **Ternal white | | | | | | |

### Example 1: Preparation and testing of multicomponent compositions

For the preparation of multicomponent compositions, component A and component B were mixed with one another and with additional water as shown in below table 3 for 30 seconds. Then the respective solid component C as indicated in below table 3 was added and mixed until visually homogeneous. The respective mixing ratios of components A : B : C are given in the following table 3.

The following table 3 shows an overview of the test results.

The linear displacement characteristics were determined in accordance with standard EN 12617-4 on 4x4x16 cm prisms. The linear displacement was measured after the time from casting as indicated in the below table 3. Positive values indicate expansion, negative values indicate shrinkage.

The compressive strength was determined in accordance with standard EN 12190 on 4x4x16cm prisms at 23°C and 50% r.h. The compressive strength was tested within 90 min from casting the prisms.

**Table 3: results of examples E-1-1 to E-1-10**

| | **E-1-1** | **E-1-2** | **E-1-3** | **E-1-4** | **E-1-5** | **E-1-6** | **E-1-7** | **E-1-8** | **E-1-9** | **E-1-10** |
|---|---|---|---|---|---|---|---|---|---|---|
| Component C | C-1 | C-1 | C-1 | C-1 | C-2 | C-3 | C-3 | C-4 | C-5 | C-6 |
| Mix ratio A B C (weight parts) | 7:18: 100 | 4:11: 100 | 3:7: 100 | 1.5:3.5: 100 | 1.5:3.5: 100 | 1.5:3.5: 100 | 6.3:15.7: 100 | 1.5:3.5: 100 | 1.5:3.5: 100 | 1.5:3.5: 100 |
| Additional Water (w% rel. to weight of A + B + C) | 0 | 6.74 | 10.16 | 13.58 | 13.58 | 13.58 | 0 | 13.58 | 13.58 | 13.58 |
| Compressive strength @ 90 min [MPa] | 14.8 | 16.6 | 18.6 | 28.2 | 35.9 | 49.6 | 21.7 | 3.9 | 5.6 | 5.2 |
| Linear Displacement @ 10h [µm/m] | +1300 | +1900 | +1700 | n.m. | +5100 | +2100 | +6300 | +2500 | +10100 | +15200 |

| | | | | | | | | | | |
|---|---|---|---|---|---|---|---|---|---|---|
| n.m.: not measured | | | | | | | | | | |

From table 3 it is evident that the use of an inventive multicomponent composition allows substantial improvement of the fast development of compressive strength (examples E-1-1 to E-1-7). Non-inventive examples E-1-8 to E-1-10 show reduced compressive strength after 90 min of curing. At the same time the linear displacement (expansion or shrinkage) is lower in case of inventive examples E-1-1 to E-1-7 as compared to non-inventive examples E-1-8 to E-1-10.

### Example 2: Testing of multicomponent composition as coating

To prepare the coatings, a concrete slab was soaked in demineralized water at 20 °C for 48 hours. Then, the surface of the concrete slab was levelled with the water surface and swabbed with a paper cloth to remove any water droplets from the surface. The concrete surface was coated with the respective multicomponent compositions as shown in table 4. Components A, B, and C-3 as described above were used in all cases. The mixing procedure of multicomponent compositions was as follows:
- mixing the respective component A and component B for 30 seconds,
- adding the component C-3 and mixing until homogeneous,
- applying the mixture to the surface of the concrete slab.

Within 3h, 6h, and 24h respectively, the coated concrete slab were overcoated with commercial products Sikafloor^{®}-264 and Sikafloor^{®}-2540. The coated slabs were cured for 28 d at 50°C and 90% r.h and subsequently for 28 d at 20°C / 60% r.h. Adhesion as well as surface defects were judged visually and are reported in below table 4.

Examples E-2-1 to E-2-3 are according to the present invention. Example E-2-4 is a comparison not according to the present invention.

**Table 4: results of examples E-2-1 to E-2-4**

| | E-2-1 | E-2-2 | E-2-3 | E-2-4 |
|---|---|---|---|---|
| Weight ratio component A : B : C | 6:15:100 | 4:10:100 | 2:5:100 | 0:0:100 |
| Adhesion | Good | Good | Good | None* |
| Blistering | None | Yes | Yes | Yes |
| Discoloration Sikafloor^{®}-264 | discoloration | discoloration | discoloration | discoloration |
| Discoloration Sikafloor^{®}-2540 | none | none | none | none |

| | | | | |
|---|---|---|---|---|
| * complete delamination of coating | | | | |

It is evident from the above table 4 that multicomponent compositions according to the present invention especially show improved adhesion and are thus suited as coating materials.

## Claims

1. A multicomponent composition comprising
at least one epoxy resin, at least one hardener for said epoxy resin, preferably an amine, and a ternary hydraulic binder,
said ternary hydraulic binder consisting of Portland cement, calcium sulfate, and calcium aluminate cement,
wherein the content of calcium aluminate cement in said ternary hydraulic binder is higher than the content of Portland cement,
**characterized in that** the content of ternary hydraulic binder is at least 50 w%, relative to the total dry weight of the multicomponent composition, and
**characterized in that** the content of calcium aluminate cement in said ternary hydraulic binder is higher than 33 w%, relative to the total dry weight of the ternary hydraulic binder.

2. A multicomponent composition according to claim 1, **characterized in that** a weight ratio of calcium aluminate cement to Portland cement is between 2:1 to 20:1, preferably, 3:1 to 10:1.

3. A multicomponent composition comprising
at least one epoxy resin, at least one hardener for said epoxy resin, preferably an amine, and a ternary hydraulic binder,
said ternary hydraulic binder consisting of Portland cement, calcium sulfate, and calcium sulfoaluminate cement,
wherein the content of calcium sulfoaluminate cement in said ternary hydraulic binder is higher than the content of Portland cement,
**characterized in that** the content of ternary hydraulic binder is at least 50 w%, relative to the total dry weight of the multicomponent composition.

4. A multicomponent composition according to claim 3, **characterized in that** a weight ratio of calcium sulfoaluminate cement to Portland cement is between 2:1 to 20:1, preferably, 3:1 to 10:1.

5. A multicomponent composition according to any of the preceding claims, **characterized in that** at least one epoxy resin which is a solid epoxy resin is present.

6. A multicomponent composition according to any of the preceding claims, **characterized in that** it additionally contains 1 - 10 w% of pozzolanic and/or latent hydraulic materials, preferably of calcined clay, silica fume, slag, in each case relative to the total dry weight of the multicomponent composition.

7. A multicomponent composition according to any of the preceding claims, **characterized in that** a weight ratio of ternary hydraulic binder to epoxy resin is between 10:1 to 50:1, preferably 15:1 to 40:1.

8. A multicomponent composition according to any of the preceding claims, **characterized in that** it additionally contains aggregate.

9. A multicomponent composition according to any of the preceding claims, **characterized in that** additionally water is present in an amount to realize a water to powder weight ratio of between 0.3 to 0.4.

10. A kit of parts comprising
(i) a first component (A) comprising at least one epoxy resin,
(ii) a second component (B) comprising at least one hardener for said first component (A), preferably an amine, and
(iii) a third component (C) comprising a ternary hydraulic binder, said ternary hydraulic binder consisting of Portland cement, calcium sulfate, and calcium aluminate cement,
wherein the content of calcium aluminate cement in said third component (C) is higher than the content of Portland cement, **characterized in that** the content of ternary hydraulic binder is at least 50 w%, relative to the total dry weight of the multicomponent composition, and **characterized in that** the content of calcium aluminate cement in said third component (C) is higher than 33 w%, relative to the total dry weight of the component (C).

11. A kit of parts comprising
(i) a first component (A) comprising at least one epoxy resin,
(ii) a second component (B) comprising at least one hardener for said first component (A), preferably an amine, and
(iii) a third component (C) comprising a ternary hydraulic binder, said ternary hydraulic binder consisting of Portland cement, calcium sulfate, and calcium sulfoaluminate cement,
wherein the content of calcium sulfoaluminate cement in said third component (C) is higher than the content of Portland cement,
**characterized in that** the content of ternary hydraulic binder is at least 50 w%, relative to the total dry weight of the multicomponent composition.

12. A kit of parts according to any of the claims 10 and 11, **characterized in that** it consists of three components (A), (B), and (C) which are stored in spatially separated containers.

13. A method for coating, joining, sealing, injecting, anchoring, or grouting components with a multicomponent composition as claimed in any one of claims 1 - 9, the method comprising the following steps:
a) mixing the at least one epoxy resin and the at least one hardener for said epoxy resin, preferably an amine,
b) adding the ternary hydraulic binder with stirring,
c) processing the mixture obtained in step b) by
c1) applying to the surface of one or more components for coating, or
c2) applying to the surface of one or more components and placing one or more further components onto the applied processable mixture to join the components, or
c3) introducing the processable mixture into the space between two or more components for sealing or grouting,
d) optionally smoothing and/or de-aerating the applied or introduced mixture, and
e) curing the mixture,
where water is present in the multicomponent composition and/or is added as a separate component before or during the addition of the ternary hydraulic binder.

14. A product comprising one or more components coated, joined, sealed, or grouted with a cured processable mixture, obtained by a method as claimed in claim 13.

15. A solid component for use in a multicomponent composition according to any of claims 1 - 9 or in a kit of parts according to any of claims 10 - 12, said solid component comprising (in each case relative to the total dry weight of the solid component):
a) 50 - 70 w% of a ternary hydraulic binder, and
b) 30 - 50 w% of aggregates and/or fillers,
said ternary hydraulic binder consisting of (in each case relative to the total dry weight of the ternary hydraulic binder):
a1) 5 - 10 w% of Portland cement,
a2) 10 - 20 w% of calcium sulfate, and
a3) 70 - 80 w% of calcium aluminate cement or of calcium sulfoaluminate cement.
